# EUROPEAN PATENT SPECIFICATION

(11) **EP 1 028 247 B1**
(45) Date of publication and mention of the grant of the patent: **05.10.2005**
(21) Application number: 00102454.6
(22) Date of filing: 04.02.2000
(51) Int. Cl.: F02F 1/42, F02F 1/38

(54) **Cylinder head of internal combustion engine**
Zylinderkopf für eine Brennkraftmaschine
Culasse pour un moteur à combustion interne

(30) Priority: 09.02.1999 JP 3134499
(43) Date of publication of application: 16.08.2000
(73) Proprietor: Toyota Jidosha Kabushiki Kaisha, Toyota-shi, Aichi-ken 471-8571 (JP)
(72) Inventor: Yasukawa, Masao, Toyota-shi, Aichi-ken 471-8571 (JP); Nagata, Masahisa, Toyota-shi, Aichi-ken 471-8571 (JP); Kawazu, Takanori, Toyota-shi, Aichi-ken 471-8571 (JP); Suzuki, Tomoaki, Toyota-shi, Aichi-ken 471-8571 (JP); Fujii, Akira, Toyota-shi, Aichi-ken 471-8571 (JP); Tachikawa, Takashi, Toyota-shi, Aichi-ken 471-8571 (JP); Inoue, Hirotoshi, Toyota-shi, Aichi-ken 471-8571 (JP); Ohmoto, Satoru, Ikeda-shi, Osaka 563-8651 (JP)
(74) Representative: TBK-Patent

(56) References cited:
- BE-A- 533 709
- US-A- 4 083 333
- US-A- 4 530 323
- PATENT ABSTRACTS OF JAPAN vol. 013, no. 489 (M-888), 7 November 1989 (1989-11-07) & JP 01 195954 A (MAZDA MOTOR CORP), 7 August 1989 (1989-08-07)
- PATENT ABSTRACTS OF JAPAN vol. 007, no. 203 (M-241), 8 September 1983 (1983-09-08) & JP 58 101247 A (KAWASAKI JUKOGYO KK), 16 June 1983 (1983-06-16)
- PATENT ABSTRACTS OF JAPAN vol. 007, no. 179 (M-234), 9 August 1983 (1983-08-09) & JP 58 082045 A (TOYO KOGYO KK), 17 May 1983 (1983-05-17)

## Description

### BACKGROUND OF THE INVENTION

### 1. Field of the Invention

The present invention relates to a cylinder head of an internal combustion engine and, more particularly, to realization of a strengthening construction for increasing the rigidity of the cylinder head.

### 2. Description of the Related Art

A conventional cylinder head constructed to be fastened to a cylinder block by six head bolts disposed around each cylinder is described in, for example, Japanese Patent Application Laid-Open No. HEI 7-217495. In this cylinder head, a top face of each combustion chamber where the combustion pressure acts is supported by the fastening force provided by the head bolts in such a manner that the top face is held fast by the surroundings.

In the thus-constructed cylinder head, however, a portion of a bottom deck located inwardly of the head bolts around each cylinder (a portion corresponding to each combustion chamber) must bear combustion pressure in the engine by means of only the rigidity of the bottom deck itself. Therefore, there is a danger that the bottom deck cannot sufficiently bear a high combustion pressure so that a portion of the bottom deck corresponding to the top face of a combustion chamber may deform upwardly. Such deformation of the bottom deck can be prevented by a method in which the wall thickness of the bottom deck is increased to secure a sufficiently high rigidity. However, this method inevitably increases the weight of the cylinder head. JP-01-195 954 discloses a rib to case tensile stress of the bottom deck.

### SUMMARY OF THE INVENTION

Accordingly, it is an object of the invention to provide an internal combustion engine cylinder head that sufficiently increases the rigidity against combustion pressure while avoiding a significant weight increase.

This object is achieved by an internal combustion engine cylinder head comprising the features of claim 1. Further advantageous features are subject-matters of the dependent claims.

In accordance with a first aspect of the invention, there is provided an internal combustion engine cylinder head connected, at a portion of the cylinder head corresponding to at least one cylinder of an internal combustion engine, to a cylinder block by at least one head bolt, characterized by including a housing boss portion provided above a combustion chamber of each cylinder for housing one of a fuel injector and a spark plug, at least one valve guide boss portion for slidably supporting an engine valve, at least one bolt boss portion into which the head bolt is inserted, a first rib strengthening connection between the at least one bolt boss portion and the at least one valve guide boss portion, and extending in such a direction that a fastening force provided by the head bolt inserted in the bolt boss portion is transmitted to the at least one valve guide boss portion. According to a second aspect, it is further possible to provide a second rib strengthening the connection between the at least one valve guide boss portion and the housing boss portion. Advantageously, the second rib extends in such a direction that a fastening force transmitted from the head bolt to the at least one valve guide boss portion via the first rib is transmitted to the housing boss portion.

In the above-described cylinder head, the first rib strengthen the connection between the bolt boss portion and the valve guide boss portions, and, optionally the second rib strengthen the connection between the valve guide boss portion and the housing boss portion which are rigid against forces in vertical directions relative to the cylinder head. Therefore, the fastening forces of the head bolts inserted into the bolt boss portions are effectively transmitted to the valve guide boss portions and the housing boss portion provided above each combustion chamber. Hence, the upper face of each combustion chamber can be effectively held despite the combustion pressure acting on the upper face, so that a bottom face of the cylinder head can be effectively prevented from being deformed. Furthermore, since the first and second ribs secure a rigidity against the combustion pressure, the cylinder head can be reduced in weight.

In accordance with a third aspect of the invention, an internal combustion engine cylinder head based on the first or second aspect is characterized in that one or more, preferably three bolt boss portions are arranged at each of opposite sides of an alignment of the at least one cylinder in such a manner as to surround each cylinder, and that the first rib strengthens connections between two bolt boss portions of the three bolt boss portions provided at each side of the cylinder alignment, the two bolt boss portions being located at opposite ends in a direction of the cylinder alignment, and at least one of the at least one valve guide boss portion that is located adjacent to the opposite-end bolt boss portions.

In this construction, the first rib strengthens the connections between the two opposite-end bolt boss portions of the three bolt boss portions provided at each side of the cylinder alignment and the valve guide boss portions adjacent to the opposite-end bolt boss portions. Therefore, the weight increase involved in the strengthening of the cylinder head is minimized, and the deformation of the upper face of the combustion chamber caused by combustion pressure can be effectively prevented.

In accordance with a fourth aspect of the invention, an internal combustion engine cylinder head based on the third aspect is characterized by further comprising at least a third rib which strengthens connections between the two bolt boss portions positioned at the opposite ends in the direction of the cylinder alignment and a bolt boss portion located at an intermediate position in the direction of the cylinder alignment, of the three bolt boss portions provided at each side of the cylinder alignment, and which extends in such a direction that the fastening force of the head bolt inserted into each intermediate bolt boss portion is transmitted to the opposite-end bolt boss portions.

In this construction, the fastening force of the head bolt inserted in the intermediate bolt boss portion of the three bolt boss portions provided at each side of the cylinder alignment is also effectively transmitted to the valve guide boss portion and the housing boss portion located over the combustion chamber. Therefore, the deformation caused by the combustion pressure is more effectively prevented, and the rigidity of the cylinder head is more effectively increased.

In accordance with a fifth aspect of the invention, an internal combustion engine cylinder head based on the fourth aspect is characterized in that the intermediate bolt boss portion of the three bolt boss portions provided at each side of the cylinder alignment extends to a contact surface of the cylinder head that contacts a head cover.

In this construction, the top faces of the bolt boss portions and the head cover-contacting surface of the cylinder head are located on the same plane. The head cover-contacting surface needs to have a processed surface in order to secure good sealing. The top face of each bolt boss portion also needs to have a processed surface since the top face of each bolt boss portion forms a seat face for the corresponding head bolt. Since the top surfaces of the bolt boss portions and the head cover-contacting surface of the cylinder head form the same plane, the surfaces can be processed simultaneously, so that the processing steps and the processing cost can be reduced.

In accordance with a sixth aspect, an internal combustion engine cylinder head based on the fourth or fifth aspect is characterized in that the intermediate bolt boss portion of the three bolt boss portions provided at each side of the cylinder alignment forms a portion of a corresponding one of side wall portions of the cylinder head or is integrally formed therewith.

In this construction, since each side wall portion of the cylinder head is partially formed by a bolt boss portion that is rigid against forces in the vertical directions relative to the cylinder head, the rigidity of each side wall portion is increased. As a result, the cylinder head can be reduced in weight, and noises let out from the cylinder head can be reduced.

In accordance with a seventh aspect of the invention, an internal combustion engine cylinder head based on any one of the first to sixth aspects is characterized in that the first rib strengthens the connection between the at least one bolt boss portion and the at least one valve guide boss portion, and is angled with respect to an upper face of the cylinder head and a bottom face of the cylinder head.

In this construction, since the first rib strengthening the connection between the at least one bolt boss portion and the at least one valve guide boss portion is angled to the upper face and the bottom face of the cylinder head, the first rib and the other connecting portion between the at least one bolt boss portion and the at least one valve guide boss portion restrain each other at the time of deformation. Therefore, deformation can be more effectively prevented. As a result, the connections between those boss portions are further strengthened, and the rigidity of the cylinder head is more efficiently increased.

In accordance with an eighth aspect of the invention, an internal combustion engine cylinder head based on any one of the first to seventh aspects is characterized in that the second rib strengthens the connection between the at least one valve guide boss portion and the housing boss portion, and is angled with respect to an upper face of the cylinder head and a bottom face of the cylinder head.

In this construction, since the second rib strengthening the connection between the at least one valve guide boss portion and the housing boss portion is angled to the upper face and the bottom face of the cylinder head, the second rib and the other connecting portion between the at least one valve guide boss portion and the housing boss portion restrain each other at the time of deformation. Therefore, deformation can be more effectively prevented. As a result, the connections between those boss portions are further strengthened, and the rigidity of the cylinder head is more efficiently increased.

In accordance with a ninth aspect of the invention, an internal combustion engine cylinder head based on any one of the first to eighth aspects is characterized in that the first rib and the second rib extend substantially along a straight line passing through a lower portion of the housing boss portion and an upper portion of the at least one bolt boss portion.

In this construction, the fastening forces of the head bolts can be more effectively transmitted to the housing boss portion, and deformation can be more effectively prevented despite combustion pressure.

### BRIEF DESCRIPTION OF THE DRAWINGS

The foregoing and further objects, features and advantages of the present invention will become apparent from the following description of preferred embodiments with reference to the accompanying drawings, wherein like numerals are used to represent like elements and wherein:
Fig. 1 is a fragmental sectional view of an embodiment of the cylinder head of the invention, taken on line I-I in Fig. 2;
Fig. 2 is a fragmental plan view of the cylinder head shown in Fig. 1;
Fig. 3 is a sectional view taken on line III-III in Fig. 2; and
Fig. 4 is a partially sectional perspective view of the cylinder head.

### DETAILED DESCRIPTION OF PREFERRED EMBODIMENTS

A preferred embodiment in which the internal combustion engine cylinder head of the invention is embodied as a cylinder head of a direct injection type diesel engine will be described in detail hereinafter with reference to the accompanying drawings.

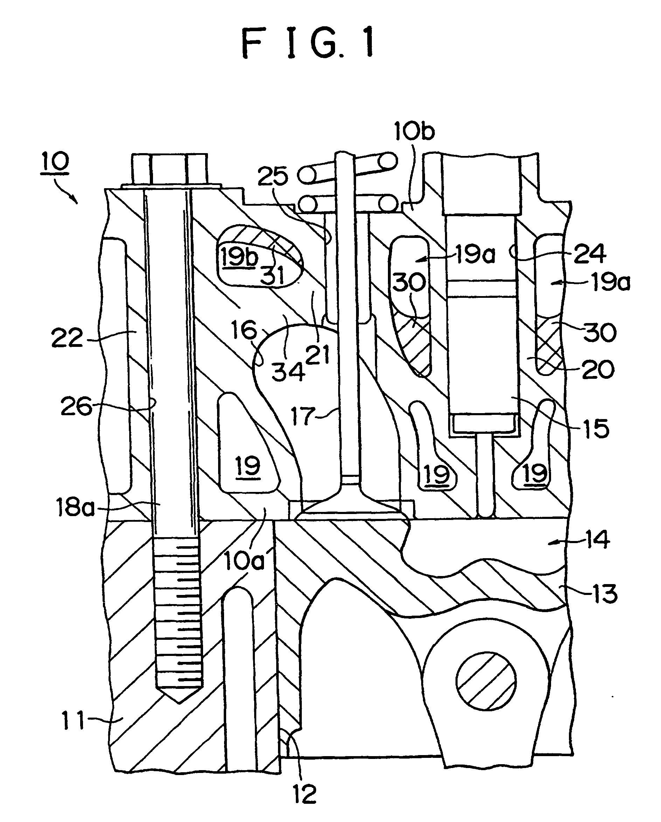

Fig. 1 is a fragmentary longitudinal sectional view of a cylinder head according to the embodiment.

Referring to Fig. 1, a cylinder head 10 is disposed on an upper portion of a cylinder block 11, and fastened thereto by head bolts 18 (only one head bolt 18a is shown in Fig. 1). In the cylinder head 10, water jackets 19 (19a, 19b, 19c) for circulating cooling water are formed between a bottom deck 10a forming a bottom wall of the cylinder head 10 and a top deck 10b forming a top face of the cylinder head 10.

The cylinder block 11 has cylinders 12 in each of which a piston 13 is disposed. The description below will be made mostly with regard to only one cylinder 12 and a corresponding portion of the cylinder head 10. A combustion chamber 14 is defined by an upper face of the piston 13, an inner peripheral wall surface of the cylinder 12, and a bottom face of the cylinder head 10. A housing boss portion 20 having a housing hole 24 for housing a fuel injector 15 is formed in a portion of the cylinder head 10 located above a central portion of the combustion chamber 14.

Ports 16 are formed adjacent to the fuel injector 15 in a portion of the cylinder head 10 located above the combustion chamber 14. An engine valve 17 is disposed in each port 16. Provided above each port 16 is a valve guide boss portion 21 having a valve guide hole 25 in which a valve guide slidably supporting the engine valve 17 is disposed.

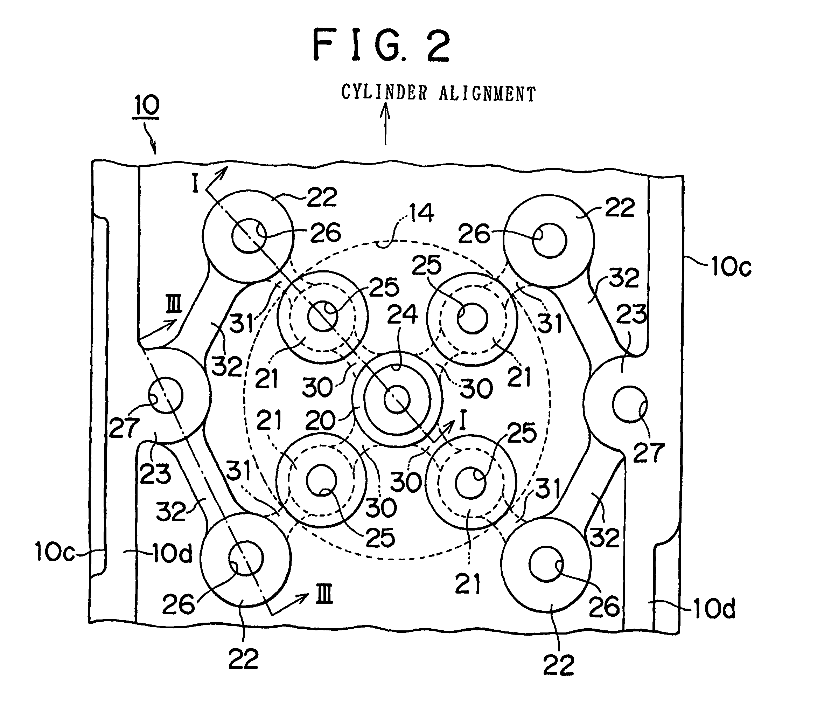

Fig. 2 is a schematic fragmentary plan view of the cylinder head 10. The longitudinal sectional view shown in Fig. 1 is taken on line I-I in Fig. 2.

As shown in Fig. 2, the housing boss portion 20 for housing the fuel injector 15 is formed at a position corresponding to the center of the combustion chamber 14. Disposed around the housing boss portion 20 are four valve guide boss portions 21 for mounting engine valves 17.

Formed radially outwardly of each valve guide boss portion 21 is a bolt boss portion 22 having a bolt hole 26 through which a head bolt 18 is inserted. Each bolt boss portion 22 extends from the bottom face of the cylinder head 10 to the upper face of the top deck 10b.

Each of side wall portions 10c of the cylinder head 10 adjacent to the combustion chamber 14 has a bolt boss portion 23 having a bolt hole 27 through which a head bolt 18 is inserted. Thus, six bolt boss portions 22, 23 are provided around each cylinder 12. The cylinder head 10 is fastened to the cylinder block 11 by using six head bolts 18 per cylinder extending through the bolt boss portions 22, 23, that is, three head bolts 18 extending at each of opposite sides of each cylinder 12.

A top face of each of the bolt boss portions 23 provided in the side wall portions 10c of the cylinder head 10 is located on the same plane as an uppermost face 10d of the cylinder head 10. Each uppermost face 10d of the cylinder head 10 needs to have a processed surface in order to secure good sealing between the cylinder head 10 and a head cover. The top face of each bolt boss portion 23 also needs to have a processed surface since the top face of each bolt boss portion 23 forms a seat face for the corresponding head bolt 18. In the cylinder head 10 of the embodiment, the top faces of the bolt boss portions 23 serving as the seat faces for the corresponding head bolts 18 and the uppermost faces 10d of the cylinder head 10 serving as the sealing surfaces contacting the head cover form the same plane, so that the top faces of the bolt boss portions 23 and the uppermost faces 10d of the cylinder head 10 can be simultaneously processed. Therefore, the processing steps and the processing cost can be reduced.

In the cylinder head 10, the bolt boss portions 23 are rigid with respect to up-down directions relative to the cylinder head 10, and form portions of the side wall portions 10c, so that the side wall portions 10c of the cylinder head 10 are reinforced by the bolt boss portions 23. The reinforcement of the side wall portions 10c by the bolt boss portions 23 allows weight reductions of the cylinder head 10 to be achieved by omitting a rib provided on an outer peripheral face of each side wall portion 10c or reducing the wall thickness of each side wall portion 10c, while maintaining a sufficiently high rigidity of the cylinder head 10. Furthermore, enhancement of the rigidity of the side wall portions 10c allows reductions of noises leaking to the outside.

The cylinder head 10 of the embodiment adopts a construction in which the rigidity of the cylinder head 10 against combustion pressure is enhanced by ribs 30-32 interconnecting the boss portions 20-23, which are rigid against forces in the up-down directions relative to the cylinder head 10.

This strengthening construction will be described with reference to Figs. 1 through 3. Ribs 30 are formed in the water jacket 19a formed between the housing boss portion 20 and the valve guide boss portions 21. The ribs 30 strengthen the connection between the housing boss portion 20 and the valve guide boss portions 21. Each rib 30 extends diagonally upward from the housing boss portion 20 toward the corresponding valve guide boss portion 21. Thus, the ribs 30 function as beams for preventing the housing boss portion 20 from being raised by combustion pressure.

Ribs 31 are formed in the water jacket 19b formed between the valve guide boss portions 21 and the bolt boss portions 22. The ribs 31 strengthen the connections between the valve guide boss portions 21 and the bolt boss portions 22. The ribs 31 extend diagonally upward from the valve guide boss portions 21 toward the corresponding bolt boss portions 22. Similar to the ribs 30, the ribs 31 function as beams for preventing the valve guide boss portions 21 from being raised by combustion pressure transmitted thereto from a valve umbrella portion 17a via the valve seat and a port separating wall 34.

In the cylinder head 10 of the embodiment, the ribs 30, 31 connect a lower portion of the housing boss portion 20 to upper portions of the bolt boss portions 22 substantially linearly via the valve guide boss portions 21.

In addition to the ribs 30, 31, the cylinder head 10 of the embodiment has ribs 32 that connect the three bolt boss portions 22, 23 provided on each side of the alignment of the cylinders 12.

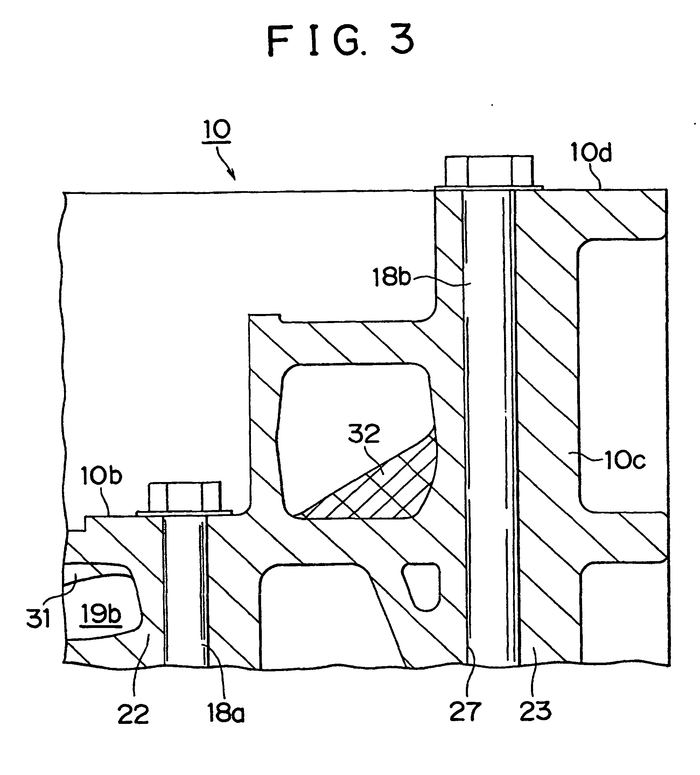

Fig. 3 shows a sectional view of the cylinder head 10 taken on line III-III in Fig. 2. The bolt boss portion 23 provided in each side portion 10c of the cylinder head 10 and the adjacent two bolt boss portions 22 are connected by ribs 32 formed on the top deck 10b. The ribs 32 extend diagonally upward from the bolt boss portions 22 to the bolt boss portion 23 on each side of the alignment of cylinders. Head bolts 18 (18b) extend through the bolt boss portions 23 to fasten the cylinder head 10 to the cylinder block 11.

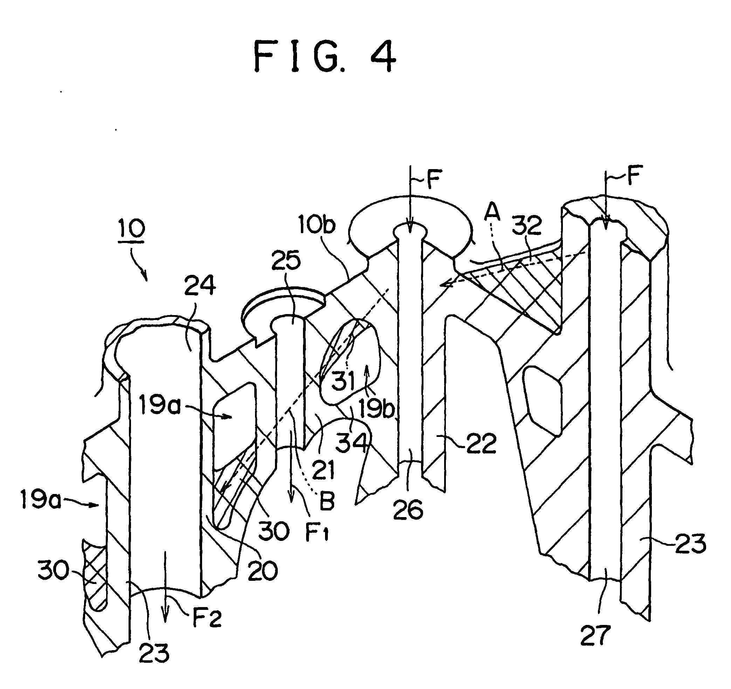

Fig. 4 is a perspective view with fragmental sections taken on planes of ribs 30-32 in the cylinder head 10. The operation of the ribs 30-32 will be described in detail with reference to Fig. 4.

In the above-described engine, combustion pressure in each combustion chamber 14 acts on the upper wall face of the combustion chamber 14 in such directions as to raise the bottom deck 10a of the cylinder head 10 upward, which includes the upper wall face of each combustion chamber 14. Therefore, the valve guide boss portions 21 and the housing boss portion 20 disposed over a central portion of the combustion chamber 14 receive upward forces caused by combustion pressure.

The bolt boss portions 22, 23 of the cylinder head 10 are fastened to the cylinder block 11 by a fastening force F provided by the head bolts 18 (18a, 18b) inserted through the bolt boss portions 22, 23, in such a manner that the bolt boss portions 22, 23 are pressed downward against the cylinder block 11. The connections between each of the bolt boss portions 23 provided in the side wall portions 10c (Fig. 2) and the adjacent bolt boss portions 22 are reinforced by the ribs 32. Therefore, as indicated by an arrow A in Fig. 4, the fastening force provided by each of the head bolts 18a inserted through the bolt boss portions 23 is effectively transmitted to the adjacent bolt boss portions 22.

The bolt boss portions 22, which are rigid against forces in vertical directions relative to the cylinder head 10, are connected to the housing boss portion 20, which is rigid against forces in the vertical directions relative to the cylinder head 10, by the ribs 31, 30, and the valve guide boss portions 21, which are rigid against forces in the vertical directions relative to the cylinder head 10. The ribs 31, 30 extend from upper portions of the bolt boss portions 22 to a lower portion of the housing boss portion 20 via the valve guide boss portions 21 so that the bolt boss portions 22, the valve guide boss portion 21 and the housing boss portion 20 are linearly and radially connected. Therefore, as indicated by the arrows A and B in Fig. 4, the fastening forces provided by the head bolts 18 (18a, 18b) are transmitted more effectively to the valve guide boss portions 21 and the housing boss portion 20. The forces transmitted to the valve guide boss portions 21 and the housing boss portion 20 each have a downward component force as indicated by arrows F₁, F₂ in Fig. 4, since the ribs 31, 30 are sloped downward from the bolt boss portions 22 toward the housing boss portion 20 via the valve guide boss portions 21 as indicated by the arrow B. Therefore, the forces F₁, F₂ act as counter forces to the aforementioned upward forces caused by combustion pressure.

In this embodiment, the fastening forces provided by the head bolts 18 (18a, 18b) disposed in the bolt boss portions 22, 23 are effectively transmitted to the valve guide boss portions 21 and the housing boss portion 20 located over the combustion chamber 14 as described above. Therefore, the bottom deck 10a of the cylinder head 10, including the upper face of the combustion chamber 14, can be efficiently held firmly despite the combustion pressure acting on the upper face, so that a bottom face of the cylinder head 10 can be effectively prevented from being deformed. Furthermore, since the ribs 30-32 secure a rigidity against combustion pressure, the cylinder head 10 can be reduced in weight.

As can be understood from the foregoing description, the cylinder head of this embodiment achieves the following advantages.

The provision of the ribs 30-32 allows efficient transmission of the fastening forces of the head bolts 18 to the valve guide boss portions 21 and the housing boss portion 20 located over the combustion chamber 14. Therefore, the rigidity of the cylinder head 10 against combustion pressure can be effectively increased.

Since the ribs 30, 31 linearly connect a lower portion of the housing boss portion 20 to upper portions of the bolt boss portions 22 via the valve guide boss portions 21, the fastening forces of the head bolts 18 are effectively transmitted to the valve guide boss portions 21 and the housing boss portion 20 located over the combustion chamber 14. Therefore, the rigidity of the cylinder head 10 against the combustion pressure can be further effectively increased.

The housing boss portion 20 and the valve guide boss portions 21 are connected by the top deck 10b extending in horizontal directions, and are also connected by the ribs 30 so that the connections therebetween are further strengthened in directions other than the horizontal directions. Thus, the strengths of the connections between the housing boss portion 20 and the valve guide boss portions 21 are efficiently increased.

The valve guide boss portions 21 and the bolt boss portions 22 are connected by the separating walls 34 extending in substantially horizontal directions, and are also connected by the ribs 31 so that the connections therebetween are further strengthened in directions other than the horizontal directions. Thus, the strengths of the connections between the valve guide boss portions 21 and the bolt boss portions 22 are efficiently increased.

The ribs 30-32 effectively increase the rigidity of the cylinder head 10 against combustion pressure and therefore efficiently prevent deformation of the upper face of the combustion chamber despite the combustion pressure acting thereon.

The bolt boss portions 23, which are rigid against forces in the vertical directions relative to the cylinder head 10, are designed to form a portion of each side wall portion 10c of the cylinder head 10, so that the rigidity of each side wall portion 10c is increased. As a result, it becomes possible to reduce the weight of the cylinder head 10 and reduce noises leaking out of the cylinder head 10.

The top faces of the bolt boss portions 23 serving as the seat faces for the corresponding head bolts 18 and the uppermost faces 10d of the cylinder head 10 serving as the sealing surfaces contacting the head cover form the same plane, so that the top faces of the bolt boss portions 23 and the uppermost faces 10d of the cylinder head 10 can be simultaneously processed. Therefore, the processing steps and the processing cost can be reduced.

The above-described cylinder head of the embodiment may also be modified as follows.

In the cylinder head 10 of the embodiment, the ribs 30, 31 connect the housing boss portion 20 to the bolt boss portions 22 via the valve guide boss portions 21, and the ribs 32 connect the bolt boss portions 22 to the bolt boss portions 23 provided in the side wall portions 10c. However, an increase in the rigidity of the cylinder head 10 against combustion pressure can be achieved even if the ribs 32 are omitted. It is also possible to provide ribs that connect the bolt boss portions 23 directly to the valve guide boss portions 21 without connecting them to the bolt boss portions 22.

Although in the forgoing embodiment, the bolt boss portions 23 partially form the side wall portions 10c of the cylinder head 10, this construction may be omitted while an efficient increase in the rigidity of the cylinder head 10 against the combustion pressure is achieved. Even with this omission, a construction in which the top faces of the bolt boss portions 23 and the uppermost faces 19d of the cylinder head 10 are located on the same plane still allows reductions of the processing steps and the processing cost.

Although in the foregoing embodiment, the top faces of the bolt boss portions 23 and the head cover-contacting uppermost faces 10d of the cylinder head 10 are located on the same plane, this construction may also be omitted while an efficient increase in the rigidity of the cylinder head 10 against combustion pressure is achieved. Even with this omission, the bolt boss portions 23 may also form portions of the side wall portions to increase the rigidity thereof.

Although in the foregoing embodiment, the ribs 30, 31 extend linearly from a lower portion of the housing boss portion 20 to upper portions of the bolt boss portions 22, it is also possible to change the configuration of the ribs to a different configuration (for example, to a configuration in which the ribs have a slight curvature) that still allows effective transmission of the fastening forces of the head bolts 18a (18b).

Although in the foregoing embodiment, the six bolts 18a, 18b are provided for each cylinder 12 to fasten the cylinder head 10 to the cylinder block 11, it is also possible to provide fewer than or more than six bolts for each cylinder 12 to fasten the cylinder head 10 to the cylinder block 11 while adopting a strengthening construction similar to the strengthening construction of the embodiment.

Although in the foregoing embodiment, the invention is applied to the cylinder head of the direct injection type diesel engine, it is also possible to adopt a strengthening construction similar to that of the embodiment in a cylinder head of a different type of internal combustion engine, for example, a gasoline engine or the like. In such a case, the housing boss portions 20 for housing fuel injectors 15 are replaced by boss portions for housing spark plugs.

A cylinder head 10 has ribs 32 that strengthen connections between bolt boss portions 22, 23 that receive therein head bolts for fastening the cylinder head 10 to a cylinder block, and ribs 30, 31 that strengthen connections between the bolt boss portions 22 and a housing boss portion 20 provided over a central portion of each combustion chamber 14 for housing a fuel injector, via valve guide boss portions 21 in which engine valve guides are disposed. The ribs 30-32 effectively transmit the fastening forces of the head bolts to the boss portions 20, 21 located over each combustion chamber 14, thereby efficiently increasing the rigidity of the cylinder head 10 against the combustion pressure.

A cylinder head (10) has ribs (32) that strengthen connections between bolt boss portions (22, 23) that receive therein head bolts for fastening the cylinder head (10) to a cylinder block, and ribs (30, 31) that strengthen connections between the bolt boss portions (22) and a housing boss portion (20) provided over a central portion of each combustion chamber (14) for housing a fuel injector, via valve guide boss portions (21) in which engine valve guides are disposed. The ribs (30-32) effectively transmit the fastening forces of the head bolts to the boss portions (20, 21) located over each combustion chamber (14), thereby efficiently increasing the rigidity of the cylinder head (10) against the combustion pressure.

## Claims

1. An internal combustion engine cylinder head (10) connected, at a portion of the cylinder head (10) corresponding to at least one cylinder (12) of an internal combustion engine, to a cylinder block (11) by at least one head bolt (18) comprising:
a housing boss portion (20) provided above a combustion chamber (14) of each cylinder (12) for housing one (15) of a fuel injector and a spark plug;
at least one valve guide boss portion (21) for slidably supporting an engine valve (17);
at least one bolt boss portion (22, 23) into which the head bolt (18) is inserted;
a first rib (31) strengthening connection and disposed between the at least one bolt boss portion (22) and the at least one valve guide boss portion (21), and extending in such a direction that a fastening force provided by the head bolt (18) inserted in the bolt boss portion (22) is transmitted to the at least one valve guide boss portion (21) **characterized in that** the first rib (31) is angled with respect to an upper face of the cylinder head (10) and a bottom face of the cylinder head (10) and a second rib (30) strengthening connection and disposed between the at least one valve guide boss portion (21) and the housing boss portion (20) and is angled with respect to an upper face of the cylinder head (10) and a bottom face of the cylinder head (10), wherein both the ribs (31, 30) extend substantially along a straight line passing through a lower portion of the housing boss portion (20) and an upper portion of the at least one bolt boss portion (22).

2. An internal combustion engine cylinder head (10) according to claim 1, **characterized by** further comprising the second rib (30) strengthening connection between the at least one valve guide boss portion (21) and the housing boss portion (20), and extends in such a direction that a fastening force transmitted from the head bolt (18) to the at least one valve guide boss portion (21) via the first rib (31) is transmitted to the housing boss portion (20).

3. An internal combustion engine cylinder head according to claim 1 or 2, **characterized in**
**that** at least three bolt boss portions (22, 23) are arranged at each of opposite sides of an alignment of the at least one cylinder in such a manner as to surround each cylinder (12), and
**that** the first rib (31) strengthens connections between two bolt boss portions (22) of the three bolt boss portions provided at each side of the cylinder alignment, the two bolt boss portions (22) being located at opposite ends in a direction of the cylinder alignment, and at least one of the at least one valve guide boss portion (21) that is located adjacent to the opposite-end bolt boss portions (22).

4. An internal combustion engine cylinder head according to any of claims 1 to 3, **characterized by** further comprising at least a third rib (32) which strengthens connections between the two bolt boss portions (22) positioned at the opposite ends in the direction of the cylinder alignment and a bolt boss portion (23) located at an intermediate position in the direction of the cylinder alignment, of the three bolt boss portions (22, 23) provided at each side of the cylinder alignment, and which extends in such a direction that the fastening force of the head bolt (18) inserted into each intermediate bolt boss portion (23) is transmitted to the opposite-end bolt boss portions (22).

5. An internal combustion engine cylinder head according to claim 4, **characterized in that** the intermediate bolt boss portion (23) of the three bolt boss portions (22, 23) provided at each side of the cylinder alignment extends to a contact surface (10d) of the cylinder head (10) that contacts a head cover.

6. An internal combustion engine cylinder head according to claim 4 or 5, **characterized in that** the intermediate bolt boss portion (23) of the three bolt boss portions (22, 23) provided at each side of the cylinder alignment is integrally formed with a portion of a corresponding one of side wall portions (10c) of the cylinder head (10).

7. An internal combustion engine cylinder head according to any of the preceding claims, **characterized in that** said ribs (30) are formed in the water jacket (19a) formed between the housing boss portion (20) and the valve guide boss portion (21).

8. An internal combustion engine cylinder head according to an of the preceding claims, **characterized in that** said ribs (31) are formed in the water jacket (19b) between the valve guide boss portion (21) and the bolt boss portions (22).

9. An internal combustion engine cylinder head according to any of the preceding claims, **characterized in that** said ribs (32) are formed on a top deck (10b) of said cylinder head (10).

## Patentansprüche

1. Zylinderkopf (10) für eine Brennkraftmaschine, der an einem mindestens einem Zylinder (12) einer Brennkraftmaschine entsprechenden Abschnitt mittels mindestens einer Kopfschraube (18) mit einem Zylinderblock (11) verbunden ist, umfassend:
einen oberhalb einer Verbrennungskammer (14) jedes Zylinders (12) vorgesehenen Gehäusevorsprung (20) zur Aufnahme einer Kraftstoffeinspritzung (15) und einer Zündkerze;
mindestens einen Ventilführungsvorsprung (21) zur gleitenden Lagerung eines Motorventils (17);
mindestens einen Schraubenvorsprung (22, 23), in den die Kopfschraube (18) eingesetzt ist;
eine zwischen dem mindestens einen Schraubenvorsprung (22) und dem mindestens einen Ventilführungsvorsprung angeordnete erste verbindungsverstärkende Rippe (31), die sich so in eine Richtung erstreckt, dass eine von der in den Schraubenvorsprung (22) eingesetzte Kopfschraube (18) aufgebrachte Befestigungskraft auf den mindestens einen Ventilführungsvorsprung (21) übertragen wird,
**dadurch gekennzeichnet, dass**
die erste Rippe (31) in Bezug auf eine obere Fläche des Zylinderkopfes (10) und eine untere Fläche des Zylinderkopfes winklig verläuft, und dass eine zweite verbindungsverstärkende Rippe (30) zwischen dem mindestens einen Ventilführungsvorsprung (21) und dem Gehäusevorsprung (20) angeordnet ist und in Bezug auf eine obere Fläche des Zylinderkopfes (10) und eine untere Fläche des Zylinderkopfes (10) winklig verläuft, wobei sich beide Rippen (31, 30) im Wesentlichen längs einer Geraden durch einen unteren Abschnitt des Gehäusevorsprungs (20) und einen oberen Abschnitt des mindestens einen Schraubenvorsprungs (22) verlaufenden Linie erstrecken.

2. Zylinderkopf (10) für eine Brennkraftmaschine nach Anspruch 1,
**dadurch gekennzeichnet, dass**
die zweite verbindungsverstärkende Rippe (30) zwischen dem mindestens einen Ventilführungsvorsprung (21) und dem Gehäusevorsprung (20) sich in eine Richtung erstreckt, dass eine von der Kopfschraube (18) zu dem mindestens einen Ventilvorsprung (21) über die erste Rippe (31) übertragene Befestigungskraft zu dem Gehäusevorsprung (20) übertragen wird.

3. Zylinderkopf (10) für eine Brennkraftmaschine nach Anspruch 1 oder 2,
**dadurch gekennzeichnet, dass**
mindestens drei Schraubenvorsprünge (22, 23) an jeder von gegenüberliegenden Reihen mindestens eines Zylinders so angeordnet sind, dass sie jeden Zylinder (12) umgeben, und
dass die erste Rippe (31) die Verbindungen zwischen zwei Schraubvorsprüngen (22) der drei Schraubenvorsprünge an jeder Seite der Zylinderreihe verstärkt, die zwei Schraubenvorsprünge (22) an gegenüberliegenden Enden in Richtung der Zylinderreihe angeordnet sind, und dass mindestens einer der Ventilführungsvorsprünge (21) benachbart zu den Schraubenvorsprüngen (22) an den gegenüberliegenden Enden angeordnet ist.

4. Zylinderkopf (10) für eine Brennkraftmaschine nach einem der Ansprüche 1 bis 3,
**dadurch gekennzeichnet, dass**
weiter mindestens eine dritte Rippe (32) vorgesehen ist, die die Verbindung zwischen zwei Schraubenvorsprüngen (22) an den gegenüberliegenden Enden der Zylinderreihe und einem in der Mitte der Zylinderreihe angeordneten Schraubenvorsprung (23) der drei Schraubenvorsprünge (22, 23) an jeder Seite der Zylinderreihe verstärkt, und sich in eine Richtung erstreckt, dass die Befestigungskraft der in den mittleren Schraubenvorsprung (23) eingesetzte Kopfschraube (18) zu an den gegenüberliegenden Enden angeordneten Schraubenvorsprüngen (22) übertragen wird.

5. Zylinderkopf (10) für eine Brennkraftmaschine nach Anspruch 4,
**dadurch gekennzeichnet, dass**
der mittlere Schraubenvorsprung (23) der drei Schraubenvorsprünge (22, 23) an jeder Seite der Zylinderreihe sich zu einer Berührungsfläche (10d) des Zylinderkopfes (10) mit dem Zylinderkopfdeckel erstreckt.

6. Zylinderkopf (10) für eine Brennkraftmaschine nach Anspruch 4 oder 5,
**dadurch gekennzeichnet, dass**
der mittlere Schraubenvorsprung (23) der drei Schraubenvorsprünge (22, 23) an jeder Seite der Zylinderreihe einstückig mit einem Teil eines entsprechenden Seitenwandabschnitts (10c) des Zylinderkopfes (10) ausgebildet ist.

7. Zylinderkopf (10) für eine Brennkraftmaschine nach einem der vorherigen Ansprüche,
**dadurch gekennzeichnet, dass**
in dem zwischen dem Gehäusevorsprung (20) und dem Ventilführungsvorsprung (21) gebildeten Wassermantel (19a) Rippen (30) ausgebildet sind.

8. Zylinderkopf (10) für eine Brennkraftmaschine nach einem der vorherigen Ansprüche,
**dadurch gekennzeichnet, dass**
in dem zwischen dem Ventilführungsvorsprung (21) und den Schraubenvorsprüngen (22) gebildeten Wassermantel (19b) Rippen (31) ausgebildet sind.

9. Zylinderkopf (10) für eine Brennkraftmaschine nach einem der vorherigen Ansprüche,
**dadurch gekennzeichnet, dass**
auf der Oberseite (10b) des Zylinderkopfes (10) Rippen (32) ausgebildet sind.

## Revendications

1. Culasse (10) de moteur à combustion interne reliée, au niveau d'une partie de la culasse (10) correspondant à au moins un cylindre (12) d'un moteur à combustion interne, à un bloc-cylindres (11) par au moins un boulon à tête (18) comprenant :
un bossage de logement (20) ménagé au-dessus d'une chambre de combustion (14) de chaque cylindre (12) pour loger l'un (15) d'un injecteur de carburant et d'une bougie d'allumage ;
au moins un bossage de guide de soupape (21) pour soutenir de façon coulissante une soupape de moteur (17) ;
au moins un bossage de boulon (22, 23) dans lequel le boulon à tête (18) est inséré ;
une première nervure (31) renforçant une liaison et disposée entre l'au moins un bossage de boulon (22) et l'au moins un bossage de guide de soupape (21), et s'étendant dans une direction telle qu'une force de fixation fournie par le boulon à tête (18) inséré dans le bossage de boulon (22) est transmise à l'au moins un bossage de guide de soupape (21) **caractérisée en ce que** la première nervure (21) est inclinée par rapport une face supérieure de la culasse (10) et à une face inférieure de la culasse (10) et une deuxième nervure (30) renforçant une liaison et disposée entre l'au moins un bossage de guide de soupape (21) et le bossage de logement (20) et est inclinée par rapport à une face supérieure de la culasse (10) et une face inférieure de la culasse (10), où les deux nervures (31, 30) s'étendent substantiellement le long d'une ligne droite passant à travers un partie inférieure du bossage de logement (20) et une partie supérieure de l'au moins un bossage de boulon (22).

2. Culasse (10) de moteur à combustion interne selon la revendication 1, **caractérisée en ce qu'**elle comprend en outre la deuxième nervure (30) renforçant une liaison entre l'au moins un bossage de guide de soupape (21) et le bossage de logement (20), et s'étend dans une direction telle qu'une force de fixation transmise à partir du boulon à tête (18) vers l'au moins un bossage de guide de soupape (21) en passant par la première nervure (31) est transmise au bossage de logement (20).

3. Culasse de moteur à combustion interne selon la revendication 1 ou 2, **caractérisée en ce**
**qu'**au moins trois bossages de boulon (22, 23) sont disposés au niveau de chacun des côtés opposés d'un alignement de l'au moins un cylindre de manière à entourer chaque cylindre (12), et
**que** la première nervure (31) renforce des liaisons entre deux bossages de boulon (22) des trois bossages de boulon prévus au niveau de chaque côté de l'alignement de cylindres, les deux bossages de boulon (22) étant situés au niveau d'extrémités opposées dans une direction de l'alignement de cylindres, et au moins un de l'au moins un bossage de guide de soupape (21) qui est située de façon adjacente aux bossages de boulon (22) d'extrémité opposée.

4. Culasse de moteur à combustion interne selon l'une quelconque des revendications 1 à 3, **caractérisée en ce qu'**elle comprend en outre au moins une troisième nervure (32) qui renforce des liaisons entre les deux bossages de boulon (22) positionnés au niveau des extrémités opposées dans la direction de l'alignement de cylindres et un bossage de boulon (23) situé à une position intermédiaire dans la direction de l'alignement de cylindres, des trois bossages de boulon (22, 23) ménagés au niveau de chaque côté de l'alignement de cylindres, et qui s'étend dans une direction telle que la force de fixation du boulon à tête (18) inséré dans chaque bossage de boulon (23) intermédiaire est transmise aux bossages de boulon (22) d'extrémité opposée.

5. Culasse de moteur à combustion interne selon la revendication 4, **caractérisée en ce que** le bossage de boulon (23) intermédiaire des trois bossages de boulon (22, 23) ménagés au niveau de chaque côté de l'alignement de cylindres s'étend vers une surface de contact (10d) de la culasse (10) qui touche un couvercle.

6. Culasse de moteur à combustion interne selon la revendication 4 ou 5, **caractérisée en ce que** le bossage de boulon (23) intermédiaire des trois bossages de boulon (22, 23) ménagés au niveau de chaque côté de l'alignement de cylindres est intégralement formé avec une partie de l'une correspondante de parties de paroi latérale (10c) de la culasse (10).

7. Culasse de moteur à combustion interne selon l'une quelconque des revendications qui précèdent, **caractérisée en ce que** lesdites nervures (30) sont formées dans la chemise d'eau (19a) formée entre le bossage de logement (20) et le bossage de guide de soupape (21).

8. Culasse de moteur à combustion interne selon l'une quelconque des revendications qui précèdent, **caractérisée en ce que** lesdites nervures (31) sont formées dans la chemise d'eau (19b) entre le bossage de guide de soupape (21) et les bossages de boulon (22).

9. Culasse de moteur à combustion interne selon l'une quelconque des revendications qui précèdent, **caractérisée en ce que** lesdites nervures (32) sont formées sur un étage supérieur (10b) de ladite culasse (10).
